# DEMANDE DE BREVET EUROPEEN

(11) **EP 3 296 592 A1**
(43) Date de publication de la demande: **21.03.2018**
(21) Numéro de dépôt: 17186800.3
(22) Date de dépôt: 18.08.2017
(51) Int. Cl.: F16H 3/00, F16H 3/093, B60K 6/48, B60K 6/547, F16H 3/08

(54) **SYSTÈME DE TRANSMISSION DE PUISSANCE POUR VÉHICULE AUTOMOBILE ET VÉHICULE AUTOMOBILE**

(30) Priorité: 19.09.2016 FR 1658728
(71) Demandeur: PSA Automobiles SA, 78300 Poissy (FR)
(72) Inventeur: GAUDICHON, LUDOVIC, 78210 ST CYR L ECOLE (FR)

(57) **Abrégé**

Système de transmission de puissance comprenant une boîte à rapport discrets et à deux arbres d'entrée, un moyen de structure pour coupler le deuxième arbre d'entrée (131) avec une machine électrique (180) à l'opposé du moteur thermique, ainsi qu'un premier et un deuxième couples de pignons, l'un des pignons de chaque couple étant monté fixe sur le premier arbre d'entrée (30) pour la propulsion avec des rapports de vitesses bas (T) et haut (7), un troisième couple de pignons, dont le pignon d'entrée est monté sur le deuxième arbre (131), pour la propulsion avec un rapport intermédiaire (2, 6), le pignon d'entrée (152, 153) du troisième couple étant monté fou sur le deuxième arbre (131), le système comprenant de plus un moyen de couplage du troisième couple de pignons avec le deuxième arbre pour engager le rapport intermédiaire, ou découpler la machine électrique du premier arbre (130).

## Description

L'invention s'inscrit dans le domaine des transmissions de puissance pour véhicule automobile hybride à propulsion basée sur un moteur thermique et une machine électrique, et impliquant une boîte de vitesses à rapports de vitesses discrets à laquelle est associée un embrayage permettant de passer les rapports alors que le moteur thermique est en fonctionnement.

Plus précisément, on s'intéresse à une telle transmission dans laquelle la machine électrique capable de propulser le véhicule en situation d'arrêt ou de découplage du moteur thermique est placée en aval de l'embrayage. Il résulte de ce positionnement que la machine électrique est souvent entrainée ou freinée par les roues, l'embrayage n'étant pas utilisable pour la découpler de celles-ci. Si le véhicule roule vite, sans toutefois être propulsé par la machine électrique, celle-ci peut être entrainée en rotation et constituer un frein pour le véhicule, sauf à l'alimenter pour réduire son couple résistant. Si le véhicule roule lentement, la machine électrique peut être freinée, l'empêchant de pouvoir servir d'alternateur pour la production d'électricité, par exemple pour la climatisation de l'habitacle du véhicule, ou tout autre équipement gros consommateur de puissance électrique.

Ces difficultés apparaissent si la machine électrique est en prise avec l'arbre de sortie de la boîte de vitesses quand un rapport de vitesses bas, comme le premier rapport, ou un rapport de vitesses élevé, comme le septième rapport sur une boîte à 7 rapports, est engagé.

Il est alors nécessaire, soit, dans la situation évoquée au cours de laquelle le véhicule roule lentement, d'utiliser une autre machine électrique, par exemple une machine électrique placée en façade accessoire du moteur thermique, pour alimenter la climatisation électrique, soit, dans la situation évoquée au cours de laquelle le véhicule roule vite, d'alimenter la machine électrique à l'aide d'une batterie pour réduire son couple résistant. Or la mise en place d'une machine électrique pour la climatisation a un coût conséquent, la puissance nécessaire étant importante. Cette considération est dimensionnante pour la machine électrique en façade accessoire. Quant à l'alimentation de la machine électrique pour réduire son couple résistant, il s'agit bien sûr d'une forme de gaspillage d'énergie.

L'invention s'applique aux architectures dans lesquels au moins l'une ou l'autre de ces contraintes, liées à la cinématique interne de la boîte de vitesses est présente.

FR2881381 présente une transmission de puissance pour véhicule hybride prévoyant un embrayage supplémentaire, nécessairement encombrant, pour coupler ou découpler la machine électrique d'un arbre de la boîte de vitesses.

L'invention vise à résoudre les problèmes ci-dessus, de la manière la plus simple et la moins encombrante possible.

Pour cela il est proposé un système de transmission de puissance pour véhicule automobile à moteur thermique comprenant une boîte de vitesses à rapport de vitesses discrets et à deux arbres d'entrée, le système comprenant aussi un premier et un deuxième embrayages pour coupler ou découpler respectivement le premier et le deuxième des deux arbres d'entrée avec un moteur thermique du véhicule, la boîte comprenant des moyens de structure pour coupler le deuxième arbre d'entrée avec une machine électrique à l'opposé, par rapport à l'embrayage correspondant, du moteur thermique, les moyen de structure définissant entre le moteur thermique et la machine électrique un rapport de vitesses de structure, indépendant du rapport de vitesses choisi à un moment donné pour la conduite du véhicule, la boîte comprenant de plus
- un premier et un deuxième couples de pignons engrainés pour rapport de vitesses de marche avant, l'un des pignons de chaque couple étant monté fixe sur le premier arbre d'entrée,
- un premier système de couplage et commande pour coupler ou découpler le premier couple de pignons engrainés ou le deuxième couple de pignons engrainés avec un train de roues motrices du véhicule pour permettre la propulsion du véhicule à l'aide du moteur thermique et via le premier embrayage avec un rapport de vitesses bas et respectivement un rapport de vitesses haut,
- au moins un troisième couple de pignons engrainés pour rapport de vitesses de marche avant le pignon d'entrée du au moins un troisième couple étant monté sur le deuxième arbre d'entrée,
- et un deuxième système de couplage et commande pour coupler ou découpler le au moins un troisième couple de pignons engrainés avec le train de roues motrices du véhicule pour permettre la propulsion du véhicule à l'aide du moteur thermique et via le deuxième embrayage avec au moins un rapport de vitesses intermédiaire entre le rapport bas et le rapport haut,

le premier système de couplage et commande mettant en oeuvre, à la fois pour le rapport bas et le rapport haut, une transmission de puissance impliquant la rotation du au moins un troisième couple de pignons engrainés à une vitesse proportionnelle à celle du premier arbre d'entrée, et le couplage du au moins un troisième couple de pignons engrainés avec le train de roues motrices du véhicule,

le pignon d'entrée du au moins un troisième couple de pignons engrainés étant monté fou sur le deuxième arbre d'entrée, le système comprend de plus un moyen de couplage et de découplage du au moins un troisième couple de pignons engrainés avec le deuxième arbre d'entrée pour
- engager le au moins un rapport intermédiaire,
- ou respectivement découpler la machine électrique du premier arbre d'entrée alors que
   a. le rapport de vitesses bas est engagé et que la machine électrique est couplée au moteur thermique par les moyen de structure,
   b. ou que le rapport de vitesses haut est engagé et que la machine électrique n'est pas alimentée électriquement.

Ainsi, on a dissocié le régime de la machine électrique en prise sur le deuxième arbre primaire de celui des roues lorsque le rapport bas est engagé, ce qui permet de permettre à la machine électrique de tourner au régime du vilebrequin (à une démultiplication près), et de se comporter comme un alternateur bien que la vitesse du véhicule soit faible. Il est ainsi possible d'alimenter la climatisation avec la machine électrique actionnée par le moteur thermique.

La solution permet aussi, lorsque le rapport élevé est engagé de désynchroniser la machine électrique du régime des roues, et donc de ne pas puiser dans la batterie pour faire tourner la machine électrique au rythme des roues en sorte de supprimer son couple de freinage. Et si besoin est, il est possible, comme avec le rapport bas, de l'utiliser comme alternateur en la reliant au moteur.

On peut donc supprimer l'alternateur existant sur la façade accessoire.

L'invention peut aussi comprendre les caractéristiques suivantes, optionnelles et avantageuses :
- le moyen de couplage et de découplage du au moins un troisième couple de pignons engrainés avec le deuxième arbre d'entrée comprend un crabot couplant un pignon d'entrée du au moins un troisième couple de pignons engrainés et le deuxième arbre d'entrée,
- les moyens de structure pour coupler le deuxième arbre d'entrée avec une machine électrique à l'opposé, par rapport à l'embrayage correspondant, du moteur thermique comprennent un couple de pignons engrainés dont l'un est monté fixe sur le deuxième arbre d'entrée et l'autre sur l'arbre d'entrée de la machine électrique,
- le premier et le deuxième arbres d'entrée sont concentriques,
- le premier système de couplage et commande mobilise un pignon dit mixte qui est monté fou sur une première section d'un arbre de sortie de la boîte et fixe sur une deuxième section dudit arbre de sortie, les deux sections étant coaxiales, la première section étant couplée au premier arbre d'entrée quand le rapport bas ou le rapport haut est sélectionné, et la deuxième section étant couplée au deuxième arbre d'entrée quand le rapport de vitesses intermédiaire est sélectionné,
- le système comprend au moins deux troisièmes couples de pignons engrainés, les pignons d'entrée des au moins deux troisièmes couples de pignons engrainés étant chacun montés fixes sur un même arbre creux concentrique au deuxième arbre d'entrée,
- il comprend un système de couplage et commande pour coupler ou découpler le premier arbre d'entrée avec le train de roues motrices du véhicule, pour permettre la propulsion du véhicule avec un rapport ou deux rapports de vitesses intermédiaires supplémentaires entre le rapport bas et le rapport haut à l'aide du moteur thermique et via le premier embrayage,
- il comprend des moyens pour engager un rapport de marche arrière.

L'invention consiste aussi en un véhicule automobile à propulsion hybride comprenant un moteur thermique et une machine électrique pour sa propulsion, et un système de transmission selon l'invention, pour relier les roues motrices, la machine électrique et le moteur thermique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une représentation d'une transmission sur laquelle est basée l'invention ;
- la figure 2 est une vue d'un mode de réalisation de l'invention ;
- la figure 3 est une vue d'un mode de mise en oeuvre de la transmission de la figure 2;
- la figure 4 est une d'un autre mode de mise en oeuvre de la transmission de la figure 2.

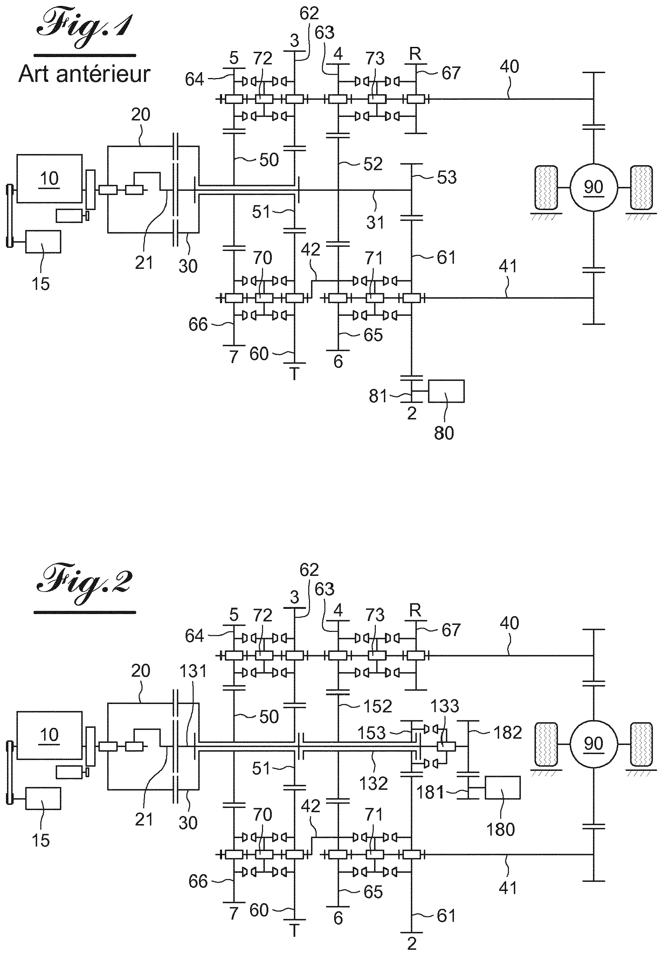

En figure 1, on a représenté une transmission n'incorporant pas l'invention, mais sur la base de laquelle l'invention est développée. Il s'agit d'une transmission incorporant une boîte de vitesses à quatre plans de pignons principaux, ce qui est un gage de compacité. Les pignons les plus petits sont du côté roue (côté conducteur). Les rapports 1 (T), 7, 3 et 5 sont toujours en prises ensemble, et les rapports 2, 4, 6 et R (marche arrière) sont également pour leur part toujours en prise ensemble.

L'ensemble comprend un moteur thermique 10, lié à un premier et un deuxième embrayages de sortie 20 et 21. Les embrayages 20 et 21 couplent le moteur thermique 10 à respectivement un premier et un deuxième arbres primaires 30 et 31 (ou arbres d'entrée), parallèles concentriques. Le deuxième arbre primaire 31 est placé à l'intérieur du premier arbre primaire 30, qui est creux.

Le moteur thermique 10 porte, en face accessoire, une machine électrique 15 qu'il peut actionner pour produire de l'électricité. Un démarreur (non référencé) est également présent, pour faciliter le démarrage du moteur thermique 10.

La boîte de vitesses comporte un premier et un deuxième arbres secondaires 40 et 41 (ou arbres de sortie), parallèles entre eux et parallèles aux arbres primaires.

Le premier arbre primaire 30 porte deux pignons fixes 50 et 51. Le deuxième arbre primaire 31 porte deux autres pignons fixes 52 et 53.

Les pignons fixes 50, 51 et 52 engrainent respectivement chacun deux pignons de sortie de rapport de marche avant. Ces paires de pignons de sortie sont référencés 64 et 66, 60 et 62, et enfin 65 et 63. Le pignon fixe 53 engraine un pignon de sortie de rapport de marche avant. Ce pignon de sortie est référencé 61.

Les pignons 64, 62 et 63 sont des pignons fous portés par le premier arbre secondaire 40. Les pignons 65 et 61 sont des pignons fous portés par le deuxième arbre secondaire 41. Le pignon 65 est aussi un pignon fixe monté sur un arbre supplémentaire 42 parallèle concentrique au deuxième arbre secondaire 41, dans le prolongement de celui-ci. Les pignons 66 et 60 sont montés fous sur cet arbre supplémentaire 42. Un pignon de marche arrière 67 est aussi monté sur le premier arbre secondaire 40.

Le deuxième arbre secondaire 41 et l'arbre supplémentaire 42 constituent deux sections d'un arbre de sortie de la boîte de vitesses. Le pignon 65 est dit mixte.

Les pignons s'organisent en couples de pignons engrainés pour les rapports de vitesses de marche avant. Les pignons 50, 51 et 52 participent à deux couples. De rapport le plus bas au rapport le plus élevé, les couples de pignons sont 51, 60 - 53, 61 - 51, 62 - 53, 63 - 50, 64 - 52, 65 - 50, 66. L'ensemble définit quatre plans de pignons.

Des synchroniseurs 70, 71, 72 et 73 permettent de solidariser respectivement les pignons 66 ou 60, 65 ou 61, 64 ou 62, et 63 ou 67 aux arbres sur lesquels ces pignons sont montés fous. Chaque synchroniseur solidarise avec l'arbre correspondant un des deux pignons dont il a la charge tout en désolidarisant nécessairement l'autre des deux pignons. Chaque synchroniseur peut aussi ne solidariser ni l'un ni l'autre des deux pignons dont il a la charge.

Dans cette architecture, la mise en oeuvre du synchroniseur 70 pour solidariser le pignon 66 ou le pignon 60 avec l'arbre supplémentaire 42 implique nécessairement la mise en oeuvre du synchroniseur 71 pour solidariser le pignon 61 avec le deuxième arbre secondaire 61. Un système de commande (non représenté) met en oeuvre ce mouvement imposé.

Les deux arbres secondaires 40 et 41 sont reliés au train de roues motrices 90 du véhicule, comprenant un différentiel.

Une machine électrique 80 est présente et possède un arbre d'entrée/sortie parallèle aux arbres primaires et secondaires et qui dispose d'un pignon fixe 81 qui engraine avec le pignon 61 et donc le pignon 53 et l'arbre 31.

Les rapports 1 (T), 2, 3, 4, 5, 6, 7 et R sont mis en oeuvre par couplage aux arbres correspondants des pignons respectivement 60, 61, 62, 63, 64, 65, 66 et 67.

Le synchroniseur 70 et l'arbre supplémentaire 42 constituent ensemble, avec le système de commande (non représenté) mettant en oeuvre le mouvement imposé du synchroniseur 71 mentionné plus haut, un système de couplage et commande permettant le couplage ou le découplage des rapports de vitesses 1(T) ou 7, via les couples de pignons engrainés 50, 66 ou 51, 60, pour permettre la propulsion du véhicule à l'aide du moteur thermique et via le premier embrayage 20.

Les pignons 53, 61 et 81 constituent des moyens de structure pour coupler le deuxième arbre d'entrée 31 avec la machine électrique 80 à l'opposé, par rapport à l'embrayage correspondant 21, du moteur thermique 10, ces moyens de structure définissant entre le moteur thermique 10 et la machine électrique 80 un rapport de vitesses de structure, indépendant du rapport de vitesses choisi à un moment donné pour la conduite du véhicule.

Les rapports T et 7 étant des rapports bas et haut, les rapports 2 et 6 sont des rapports intermédiaires, ainsi que les rapports 3, 5 et 4, ces derniers étant, dans le contexte de l'invention, des rapports intermédiaires supplémentaires.

En figure 2, on a représenté un mode de réalisation de l'invention, qui est basé sur la transmission de la figure 1. Pour faciliter la lecture, les références des éléments inchangés ne sont pas modifiées, et les éléments correspondants mais non identiques ont des références incrémentées de la valeur 100.

Un pignon supplémentaire a été placé sur le deuxième arbre primaire 131, à l'opposé de l'embrayage 21. Il s'agit d'un pignon fixe 182. Il engraine avec un pignon 181 monté fixe sur l'arbre d'entrée/sortie de la machine électrique 180, qui a été déplacée par rapport à la transmission de la figure 1. L'arbre d'entrée/sortie est parallèle aux arbres primaires et secondaires. L'arbre primaire 131 est un peu plus long qu'en figure 1, mais cela est compensé par les gains liés à la suppression potentielle (ou la réduction de la taille) de la machine électrique en façade accessoire 15.

Le deuxième arbre primaire 131 ne porte pas d'autre pignon fixe, ou du moins ne porte pas de pignon fixe pour l'engagement de rapport de vitesses. Il est inséré dans un arbre fou 132 qui porte deux pignons fous 152 et 153 qui engrainent les pignons 63 et 65 pour le premier, et 61 pour le deuxième.

Un crabot 133 permet de coupler l'arbre fou 132 avec le deuxième arbre 131. Il constitue un moyen de couplage des couple de pignons engrainés 152, 65, et 153, 61 avec le deuxième arbre d'entrée 131 pour engager le rapport intermédiaire 6 ou 2. Il couple un pignon d'entrée 153 des couples de pignons engrainés 152, 65 et 153, 61, et le deuxième arbre d'entrée 131.

Les pignons 182 et 181 constituent des moyens de structure pour coupler le deuxième arbre d'entrée 131 avec la machine électrique 180 à l'opposé, par rapport à l'embrayage correspondant 21, du moteur thermique 10, ces moyens de structure définissant entre le moteur thermique 10 et la machine électrique 180 un rapport de vitesses de structure, indépendant du rapport de vitesses choisi à un moment donné pour la conduite du véhicule.

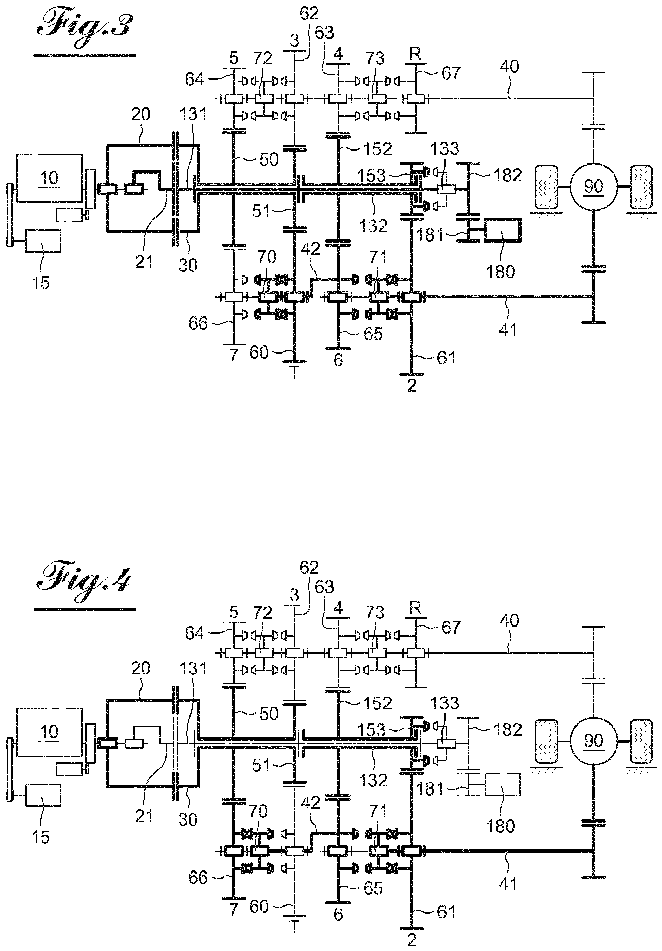

En figure 3, on a représenté la mise en oeuvre du rapport de vitesses 1 (T) : les éléments en gras sont ceux qui reçoivent de la puissance du moteur thermique. Les deux embrayages 20 et 21 sont fermés, contrairement à ce qui était imposé dans la transmission de la figure 1. Les synchroniseurs 70 et 71 ont couplés les pignons 60 et 61 aux arbres correspondants. Le crabot 133 est ouvert: il constitue un moyen de découplage des couples de pignons engrainés 152, 65 et 153, 61 d'avec le deuxième arbre d'entrée 131 pour découpler la machine électrique 180 du premier arbre d'entrée 30 alors que le rapport de vitesses bas T est engagé et que la machine électrique 180 est couplée au moteur thermique 10 par les moyens de structure 181, 182.

Le premier arbre primaire 30 fait tourner, par les pignons 51 et 60, l'arbre supplémentaire 42 et le pignon 65. Le pignon 65 fait tourner le pignon 152 et l'arbre fou 132, qui par les pignons 153 et 61 fait tourner le deuxième arbre secondaire 41. Le véhicule est propulsé avec le rapport de vitesses 1 (T), et avec une vitesse faible.

Le deuxième arbre primaire 131, en rotation puisque l'embrayage 21 est fermé, fait tourner les pignons 182 et 181 et la machine électrique 180, qui est en mesure de fournir de l'électricité pour la climatisation électrique ou d'autres consommateurs, embarqués dans le véhicule, de fortes puissances électriques.

La machine électrique 15 peut ne pas être dimensionnée pour fournir une puissance électrique très importante, puisque la machine électrique 180 est utilisable dans cette situation.

En figure 4, on a représenté la mise en oeuvre du rapport de vitesses 7 : les éléments en gras sont à nouveau ceux qui reçoivent de la puissance du moteur thermique. L'embrayage 20 est fermé, et l'embrayage 21 est ouvert. Les synchroniseurs 70 et 71 ont couplé les pignons 66 et 61 aux arbres correspondants. Le crabot 133 est ouvert: il constitue un moyen de découplage des couples de pignons engrainés 152, 65 et 153, 61 d'avec le deuxième arbre d'entrée 131 pour découpler la machine électrique 180 du premier arbre d'entrée 30 alors que le rapport de vitesses haut 7 est engagé et que la machine électrique 180 n'est pas alimentée électriquement.

Le premier arbre primaire 30 fait tourner, par les pignons 50 et 66, l'arbre supplémentaire 42 et le pignon 65. Le pignon 65 fait tourner le pignon 152 et l'arbre fou 132, qui par les pignons 153 et 61 fait tourner le deuxième arbre secondaire 41. Le véhicule est propulsé avec le rapport de vitesses 7, et à une vitesse élevée.

La machine électrique 180 peut ne pas être alimentée, puisque l'arbre 131 n'est pas relié aux roues du véhicule. La machine électrique 180 peut être arrêtée.

## Revendications

1. Système de transmission de puissance pour véhicule automobile à moteur thermique (10), comprenant une boîte de vitesses à rapport de vitesses discrets et à deux arbres d'entrée (30, 131), le système comprenant aussi un premier et un deuxième embrayages (20, 21) pour coupler ou découpler respectivement le premier et le deuxième des deux arbres d'entrée (30, 131) avec un moteur thermique (10) du véhicule, la boîte comprenant des moyens de structure pour coupler (181, 182) le deuxième arbre d'entrée (131) avec une machine électrique (180) à l'opposé, par rapport à l'embrayage correspondant (21), du moteur thermique (10), les moyens de structure pour coupler (181, 182) définissant entre le moteur thermique (10) et la machine électrique (180) un rapport de vitesses de structure, indépendant du rapport de vitesses choisi à un moment donné pour la conduite du véhicule, la boîte comprenant de plus
- un premier et un deuxième couples de pignons engrainés pour rapport de vitesses de marche avant (50, 66, 51, 60), l'un des pignons de chaque couple étant monté fixe sur le premier arbre d'entrée (30),
- un premier système de couplage et commande (42, 70) pour coupler ou découpler le premier couple de pignons engrainés (50, 66) ou le deuxième couple de pignons engrainés (51, 60) avec un train de roues motrices du véhicule (90) pour permettre la propulsion du véhicule à l'aide du moteur thermique et via le premier embrayage (20) avec un rapport de vitesses bas (T) et respectivement un rapport de vitesses haut (7),
- au moins un troisième couple de pignons engrainés pour rapport de vitesses de marche avant (152, 65, 153, 61), le pignon d'entrée du au moins un troisième couple (152, 153) étant monté sur le deuxième arbre d'entrée (131),
- et un deuxième système de couplage et commande (71) pour coupler ou découpler le au moins un troisième couple de pignons engrainés (152, 65, 153, 61) avec le train de roues motrices du véhicule (90) pour permettre la propulsion du véhicule à l'aide du moteur thermique (10) et via le deuxième embrayage (21) avec au moins un rapport de vitesses intermédiaire (2, 6) entre le rapport bas et le rapport haut,
le premier système de couplage et commande (42, 70) mettant en oeuvre, à la fois pour le rapport bas (T) et le rapport haut (7), une transmission de puissance impliquant la rotation du au moins un troisième couple de pignons engrainés (152, 65, 153, 61) à une vitesse proportionnelle à celle du premier arbre d'entrée (30), et le couplage du au moins un troisième couple de pignons engrainés (152, 65, 153, 61) avec le train de roues motrices du véhicule (90),
**caractérisé en ce que** le pignon d'entrée (152, 153) du au moins un troisième couple de pignons engrainés (152, 65, 153, 61) est monté fou sur le deuxième arbre d'entrée (131), le système comprenant de plus un moyen de couplage et de découplage (133) du au moins un troisième couple de pignons engrainés (152, 65, 153, 61) avec le deuxième arbre d'entrée (131) pour engager le au moins un rapport intermédiaire, ou respectivement découpler la machine électrique (180) du premier arbre d'entrée (30) alors que le rapport de vitesses bas (T) est engagé et que la machine électrique (180) est couplée au moteur thermique (10) par les moyens de structure (181, 182) ou que le rapport de vitesses haut (7) est engagé et que la machine électrique (180) n'est pas alimentée électriquement.

2. Système de transmission de puissance pour véhicule automobile à moteur thermique selon la revendication 1, **caractérisé en ce que** le moyen de couplage et de découplage (133) du au moins un troisième couple de pignons engrainés (152, 65, 153, 61) avec le deuxième arbre d'entrée (131) comprend un crabot (133) couplant un pignon d'entrée (153) du au moins un troisième couple de pignons engrainés (152, 65, 153, 61) et le deuxième arbre d'entrée (131).

3. Système de transmission de puissance pour véhicule automobile à moteur thermique selon la revendication 1 ou la revendication 2, **caractérisé en ce que** les moyens de structure pour coupler (181, 182) le deuxième arbre d'entrée (131) avec une machine électrique (180) à l'opposé, par rapport à l'embrayage correspondant (21), du moteur thermique (10) comprennent un couple de pignons engrainés (181, 182) dont l'un est monté fixe sur le deuxième arbre d'entrée (131) et l'autre sur l'arbre d'entrée de la machine électrique (180).

4. Système de transmission de puissance pour véhicule automobile à moteur thermique selon l'une des revendications 1 à 3, **caractérisé en ce que** le premier et le deuxième arbres d'entrée (30, 131) sont concentriques.

5. Système de transmission de puissance pour véhicule automobile à moteur thermique selon l'une des revendications 1 à 4, **caractérisé en ce que** le premier système de couplage et commande (42, 70) mobilise un pignon mixte (65) qui est monté fou sur une première section (41) d'un arbre de sortie de la boîte et fixe sur une deuxième section (42) dudit arbre de sortie, les deux sections étant coaxiales, la première section (42) étant couplée au premier arbre d'entrée (30) quand le rapport bas (T) ou le rapport haut (7) est sélectionné, et la deuxième section (41) étant couplée au deuxième arbre d'entrée (131) quand le rapport de vitesses intermédiaire (2, 6) est sélectionné.

6. Système de transmission de puissance pour véhicule automobile à moteur thermique selon l'une des revendications 1 à 5, **caractérisé en ce que** le système comprend au moins deux troisièmes couples de pignons engrainés (152, 65, 153, 61) pour définir des rapports de vitesses intermédiaires entre rapports bas et haut, les pignons d'entrée (152, 153) des au moins deux troisièmes couples de pignons engrainés (152, 65, 153, 61) étant chacun montés fixes sur un même arbre creux (132) concentrique au deuxième arbre d'entrée (131).

7. Système de transmission de puissance pour véhicule automobile à moteur thermique selon l'une des revendications 1 à 6, **caractérisé en ce qu'**il comprend un système de couplage et commande (62, 64, 72) pour coupler ou découpler le premier arbre d'entrée (30) avec le train de roues motrices (90) du véhicule, pour permettre la propulsion du véhicule (42) avec un rapport ou deux rapports de vitesses (3, 5) intermédiaires supplémentaires entre le rapport bas (T) et le rapport haut (7) à l'aide du moteur thermique (10) et via le premier embrayage (20).

8. Système de transmission de puissance pour véhicule automobile à moteur thermique selon l'une des revendications 1 à 7, **caractérisé en ce qu'**il comprend des moyens pour engager un rapport de marche arrière (67).

9. Véhicule automobile à propulsion hybride comprenant un moteur thermique et une machine électrique pour sa propulsion, et un système de transmission selon l'une des revendications 1 à 8, pour relier les roues motrices, la machine électrique et le moteur thermique.
